# EUROPEAN PATENT SPECIFICATION

(11) **EP 3 858 917 B1**
(45) Date of publication and mention of the grant of the patent: **04.09.2024**
(21) Application number: 19864945.1
(22) Date of filing: 13.09.2019
(51) Int. Cl.: C08L 67/04, C08L 101/16

(54) **RESIN COMPOSITION AND MOLDED BODY THEREOF**
HARZZUSAMMENSETZUNG UND FORMKÖRPER DARAUS
COMPOSITION DE RÉSINE ET CORPS MOULÉ DE CELLE-CI

(30) Priority: 28.09.2018 JP 2018183563
(43) Date of publication of application: 04.08.2021
(73) Proprietor: Kaneka Corporation, Osaka-shi, Osaka 530-8288 (JP); Tokyo University of Agriculture, Tokyo 156-8502 (JP)
(72) Inventor: SATO, Shunsuke, Hyogo 676-8688 (JP); HASHIGUCHI, Tomoaki, Osaka 566-0072 (JP); TAGUCHI, Seiichi, Tokyo 156-8502 (JP)
(74) Representative: Vossius & Partner Patentanwälte Rechtsanwälte mbB
(86) International application number: PCT/JP2019/036027
(87) International publication number: WO 2020/066679

(56) References cited:
- WO-A1-02/06400
- WO-A1-2012/137681
- JP-A- 2006 274 182
- JP-A- 2007 269 842
- JP-A- 2010 202 757
- JP-A- 2010 202 757
- US-A1- 2002 198 332
- US-A1- 2014 011 965

## Description

### Technical Field

The present invention relates to a resin composition containing polylactic acid and a molded body of the resin composition.

### Background Art

Polylactic acid is a biodegradable polyester resin producible by polymerization of lactic acid resulting from microbial fermentation of a plant-based renewable raw material such as starch. In recent years, the use of polylactic acid is drawing attention from the viewpoints of building a recycle-based society and suppressing climate change caused by an increase in carbon dioxide emissions.

However, polylactic acid is a very hard resin and, as such, has limited application. To address this disadvantage, various techniques for softening of polylactic acid have been investigated. A known technique for softening of polylactic acid is to add a plasticizer. Examples of materials which have been reported to be used as plasticizers added to polylactic acid include isobutyl adipate and dioctyl sebacate (Patent Literature 1), and further include tributyl acetylcitrate and triacetylene (Patent Literatures 2 and 3). However, these materials have drawbacks in that they have a small plasticizing effect or cause plasticizer bleed-out.

A possible approach to prevention of bleed-out is to blend polylactic acid with a soft polymer rather than with a low-molecular-weight compound.

Although not related to plasticizing techniques, Patent Literature 4 reports the technique of improving the impact resistance of polylactic acid by adding to it a biodegradable aliphatic polyester such as polycaprolactone or a condensate of butanediol and succinic acid.

Patent Literature 5, which is not related to plasticizing techniques either, reports providing a resin composition having heat resistance and impact resistance by adding a block polymer of polylactic acid and polyhydroxyalkanoate as a compatibilizer to a mixture of polylactic acid and a polyhydroxyalkanoate resin.

### Citation List

### Patent Literature

PTL 1: Japanese Patent No. H4-335060
PTL 2: Japanese Laid-Open Patent Application Publication No. H8-34913
PTL 3: Japanese Laid-Open Patent Application Publication No. H11-116788
PTL 4: Japanese Laid-Open Patent Application Publication No. H9-111107
PTL 5: Japanese Laid-Open Patent Application Publication No. 2010-202757

### Summary of Invention

### Technical Problem

Conventionally, blending polylactic acid with another polymer has the problem of deteriorating the transparency of the polylactic acid. In addition, it is desirable that the polymer blended into the polylactic acid should also be biodegradable.

In view of the above circumstances, the present invention aims to provide a softened, polylactic acid-containing resin composition by plasticizing polylactic acid through blending with a biodegradable polymer without substantial decrease in transparency.

### Solution to Problem

The present inventors have conducted intensive studies to solve the problem described above. As a result, the present inventors have surprisingly found that a polyester copolymer containing lactic acid as one of the monomer components has a high ability to plasticize polylactic acid and that blending polylactic acid with this polyester copolymer does not cause any substantial decrease in transparency. The inventors have completed the present invention based on these findings.

That is, the present invention relates to a resin composition containing polylactic acid and a polyester copolymer of lactic acid and another hydroxycarboxylic acid as defined in the appended claims. Preferably, the other hydroxycarboxylic acid is at least one selected from the group consisting of 3-hydroxybutanoic acid, 3-hydroxypentanoic acid, 3-hydroxyhexanoic acid, 3-hydroxyheptanoic acid, 3-hydroxyoctanoic acid, 3-hydroxynonanoic acid, 3-hydroxydecanoic acid, 3-hydroxydodecanoic acid, 3-hydroxytetradecanoic acid, 3-hydroxypentadecanoic acid, and 3-hydroxyhexadecanoic acid. Preferably, the content of the polyester copolymer is from 1 to 200 parts by weight per 100 parts by weight of the polylactic acid. The mole fraction of the lactic acid in the polyester copolymer is from 10 to 70 mol%. Preferably, the other hydroxycarboxylic acid is 3-hydroxybutanoic acid. The present invention further relates to a molded body produced by molding the resin composition.

### Advantageous Effects of Invention

According to the present invention, a softened, polylactic acid-containing resin composition can be provided by plasticizing polylactic acid through blending with a biodegradable polymer without substantial decrease in transparency.

### Description of Embodiments

Hereinafter, an embodiment of the present invention will be described in detail.

A resin composition of the present invention contains polylactic acid and a polyester copolymer of lactic acid and another hydroxycarboxylic acid. This composition can be provided as a softened, polylactic acid-containing resin composition by plasticizing polylactic acid without substantial decrease in transparency of the polylactic acid.

### Polylactic Acid

Polylactic acid is a polyester containing lactic acid as a structural monomer. In the present invention, conventionally-known polylactic acid can be used, and the polylactic acid used may be any of a homopolymer of L-lactic acid, a homopolymer of D-lactic acid, a copolymer of L-lactic acid and D-lactic acid, and a polymer blend of these polymers. The proportion between the L- and D-isomers constituting the polylactic acid is not limited to any particular range. The polylactic acid may be either crystalline or amorphous.

The raw material used to produce the polylactic acid is not limited to any particular material, and may be L-lactic acid, D-lactic acid, DL-lactic acid, a mixture of these lactic acids, L-lactide, D-lactide, meso-lactide, or a mixture of these lactides. The method used to produce the polylactic acid is not limited to any particular method, and may be a known method such as dehydration polycondensation or ring-opening polymerization.

The molecular weight of the polylactic acid is not limited to any particular range. The number average molecular weight of the polylactic acid may be, for example, from 1,000 to 700,000 and preferably from 10,000 to 300,000.

### Polyester Copolymer

The polyester copolymer used in the present invention is a polyester copolymer of lactic acid and another hydroxycarboxylic acid. The polyester copolymer is a biodegradable polymer material. Adding this polyester copolymer to the polylactic acid can plasticize the polylactic acid without any substantial decrease in transparency of the polylactic acid.

The polyester copolymer is a product of random copolymerization of lactic acid and the other hydroxycarboxylic acid, and differs from a block polymer of polylactic acid and polyhydroxyalkanoate as described in Patent Literature 5. The use of a block copolymer decreases the transparency of the polylactic acid.

The lactic acid-derived monomer unit of the polyester copolymer is not limited to any particular monomer unit, and may be either a monomer unit derived from L-lactic acid or a monomer unit derived from D-lactic acid. In general, the lactic acid-derived monomer unit is one derived from D-lactic acid.

The other hydroxycarboxylic acid is preferably 3-hydroxyalkanoic acid, and specific examples include 3-hydroxybutanoic acid, 3-hydroxypentanoic acid, 3-hydroxyhexanoic acid, 3-hydroxyheptanoic acid, 3-hydroxyoctanoic acid, 3-hydroxynonanoic acid, 3-hydroxydecanoic acid, 3-hydroxydodecanoic acid, 3-hydroxytetradecanoic acid, 3-hydroxypentadecanoic acid, and 3-hydroxyhexadecanoic acid. These may be used alone, or two or more thereof may be used in combination. It is particularly preferable that 3-hydroxybutanoic acid be contained as the other hydroxycarboxylic acid. P(LA-co-3HB), which is a copolymer of lactic acid and 3-hydroxybutanoic acid, is best-suited for use as the polyester copolymer.

To obtain a large softening effect on the polylactic acid, the mole fraction of the lactic acid is from 10 to 70 mol% based on the total number of moles of the lactic acid and the other hydroxyalkanoic acid constituting the polyester copolymer. The mole fraction is preferably from 15 to 60 mol% and more preferably from 15 to 50 mol%. The value of the mole fraction of the lactic acid can be determined by HPLC.

The molecular weight of the polyester copolymer is not limited to any particular range. The weight-average molecular weight of the polyester copolymer may be, for example, from 1 to 1,000,000 and preferably 1 to 500,000. The value of the weight-average molecular weight was determined based on standard polystyrene and using a gel permeation chromatograph (GPC, manufactured by Shimadzu Corporation) equipped with Tandem TSKgel Super HZM-H Column (manufactured by Tosoh Corporation).

The method used to produce the polyester copolymer of the lactic acid and the other hydroxycarboxylic acid is not limited to any particular method and may be a conventionally-known method. Examples of the method for producing P(LA-co-3HB) include production methods using recombinant microorganisms, such as the methods described in WO No. 2009/131186 and WO No. 2006/126796.

### Blend proportions

The blend proportions between the polylactic acid and the polyester copolymer in the resin composition of the present invention may be any value as long as the addition of the polyester copolymer can plasticize the polylactic acid. The blend proportions may be chosen as appropriate depending on the properties of the polyester copolymer. Generally, in view of ensuring both the softening effect and the transparency of the resin composition, the content of the polyester copolymer is preferably from 1 to 200 parts by weight, more preferably from 5 to 100 parts by weight, and even more preferably from 10 to 80 parts by weight per 100 parts by weight of the polylactic acid. The lower limit of the content may be 20 parts by weight or more or 30 parts by weight or more. The upper limit of the content may be 60 parts by weight or less or 50 parts by weight or less.

### Additional Components

The resin composition of the present invention may contain a thermoplastic resin other than the polylactic acid and the polyester copolymer. The thermoplastic resin used is not limited to any particular resin and may be a conventionally-known resin. Specific examples of the resin include biodegradable aliphatic or aromatic polyesters other than the polylactic acid and the polyester copolymer.

A resin having low compatibility with the polylactic acid could deteriorate the transparency of the polylactic acid. Thus, it is preferable not to add such a resin. If such a resin is added, the amount of the added resin is preferably small. For example, the content of a polyhydroxyalkanoate resin having low compatibility with the polylactic acid is preferably, but not limited to, from about 0 to 100 parts by weight, more preferably from about 0 to 50 parts by weight, per 100 parts by weight of the polylactic acid.

The resin composition of the present invention may, if desired, contain an additive to the extent that the additive does not impair the effect of the present invention. Examples of the additive include, but are not limited to, a plasticizer, a hydrolysis inhibitor, a compatibilizer, an antioxidant, an ultraviolet absorber, a processing aid, an antistatic, a colorant, a crystal nucleating agent, inorganic or organic particles, a lubricant, a mold release, a water repellent, an inorganic filler, a fungicide, an antimicrobial, a foaming agent, and a flame retardant. The content of the additive can be chosen as appropriate depending on the intended purpose. One additive may be added alone, or two or more additives may be added.

The plasticizer used may be one which is commonly used as a plasticizer for polymers. Specific examples of the plasticizer include polyester-based plasticizers, glycerin-based plasticizers, polyfunctional carboxylate-based plasticizers, polyalkylene glycol-based plasticizers, and epoxy-based plasticizers.

### Applications

The resin composition of the present invention can be formed into pellets by melting and kneading its components, extruding the molten resin into the form of a strand, and cutting the strand. A desired molded body can be obtained by drying the pellets for water removal and then subjecting the dried pellets to a molding process using a known molding method. Examples of the molding method include film forming, sheet forming, injection molding, blow molding, fiber spinning, extrusion foaming, and bead foaming.

Examples of the method for producing a film-shaped body include T-die extrusion, calender forming, roll forming, and inflation forming. The film forming method used is not limited to these. The film obtained from the resin composition of the present invention can be further subjected to heating-based thermoforming, vacuum forming, or press forming.

Examples of the method which can be used to produce an injection-molded product include injection molding methods commonly used for molding of thermoplastic resins, such as injection molding, gas-assisted injection molding, and injection compression molding. A method other than the above methods may be used depending on the intended purpose. For example, in-mold injection molding, gas counter pressure molding, double molding, sandwich molding, push-pull injection molding, or SCORIM can be used. The injection molding method used is not limited to those mentioned above.

The resin composition of the present invention may be processed into a molded body in the form of pellets, a film, a sheet, or fibers by means of an extrusion molding machine or may be processed into a molded body of predetermined shape by injection molding.

When the resin composition of the present invention contains a foaming agent, the molded body of the present invention may be a foamable molded body and may be subjected to post-processing foaming to obtain a molded foam product.

The resin composition of the present invention can be processed into a wide variety of molded bodies. Examples of the molded bodies include paper, a film, a sheet, a tube, a plate, a rod, a container, a pouch, and a part. The molded body of the present invention may, for the purpose of improving its physical properties, be combined with another molded body made of a material different from the resin composition of the present invention (examples of the other molded body include a fiber, a yarn, a rope, a woven fabric, a knitted fabric, a non-woven fabric, paper, a film, a sheet, a tube, a plate, a rod, a container, a pouch, a part, and a foam product). The molded body of the present invention is not limited to any particular application and can be suitably used in various fields such as agricultural industry, fishery industry, forestry industry, horticultural industry, medical industry, hygiene industry, apparel industry, non-apparel industry, packaging industry, automotive industry, building material industry, and various other industries.

### Examples

Hereinafter, the present invention will be described in more detail based on examples. It should be noted that the present invention is not limited to the examples presented below.

### Materials

Polyester copolymer material A: P(LA-co-3HB) produced according to the teachings of Journal of Biotechnology, 154 (2011), pp. 255-260 was obtained from Tokyo University of Agriculture and used as polyester copolymer material A. The mole fraction of the lactic acid in the polyester copolymer material A was 45 mol%, and the weight-average molecular weight of this material was about 110,000. The mole fraction of the lactic acid and the weight-average molecular weight were measured according to the methods described in the above document. The lactic acid-derived monomer unit in the polyester copolymer material A was one derived from D-lactic acid.

Comparative polyester copolymer material B: A copolymer of 3-hydroxybutyric acid and 3-hydroxyhexanoic acid, namely P(3HB-co-3HH), was produced according to the teachings of WO No. 2015/115619 and used as comparative polyester copolymer material B. The mole fraction of 3HH in the comparative polyester copolymer material B was 11 mol%.

Polylactic acid material A: Ingeo 10361D manufactured by Natureworks LLC was used as polylactic acid material A.

### Example 1

The polylactic acid material A and P(LA-co-3HB) obtained as the polyester copolymer material A were placed into a co-rotating, intermeshing twin-screw extruder (TEM-26SS, manufactured by Toshiba Machine Co., Ltd.), and melted and kneaded at a set temperature of 100 to 130°C and a screw rotation speed of 100 rpm to give a polyester resin composition. The materials were used in such proportions that the polylactic acid material A:polyester copolymer material A weight ratio was 80:20 (namely, the content of the polyester copolymer was 25 parts by weight per 100 parts by weight of the polylactic acid). The polyester resin composition was drawn through the die into the form of a strand, which was cut into pellets.

### Sheet Forming

The pellets obtained were introduced into a single-screw extruder (Labo Plastomill 20C 200, manufactured by Toyo Seiki Seisaku-sho, Ltd.) equipped with a T-die having a width of 150 mm and a lip of 0.25 mm and extruded at a processing temperature of 160°C and a screw rotational speed of 10 rpm to obtain a 0.1-mm-thick sheet.

### Haze and Total Light Transmittance

The sheet obtained was measured for the haze and total light transmittance using a haze meter (NDH 7000 SP, manufactured by Nippon Denshoku Industries Co., Ltd.). The results are shown in Table 1.

### Elongation at Break

A dumbbell-shaped sample was punched out of the obtained sheet and was measured for the elongation at break using Autograph (manufactured by Shimadzu Corporation) under conditions as specified in JIS K 7161. The result is shown in Table 1.

### Example 2

Pellets and a sheet were obtained in the same manner as in Example 1, except that the polylactic acid material A:polyester copolymer material A weight ratio was changed to 60:40 (the content of the polyester copolymer was 66.7 parts by weight per 100 parts by weight of the polylactic acid). The measurements of the haze, total light transmittance, and elongation at break were conducted in the same manner as in Example 1. The results are shown in Table 1.

### Example 3

Pellets and a sheet were obtained in the same manner as in Example 1, except that the polylactic acid material A:polyester copolymer material A weight ratio was changed to 40:60 (the content of the polyester copolymer was 150 parts by weight per 100 parts by weight of the polylactic acid). The measurements of the haze, total light transmittance, and elongation at break were conducted in the same manner as in Example 1. The results are shown in Table 1.

### Comparative Example 1

Pellets and a sheet were obtained in the same manner as in Example 1, except that the polyester copolymer material A was not used and only the polylactic acid material A was used. The measurements of the haze, total light transmittance, and elongation at break were conducted in the same manner as in Example 1. The results are shown in Table 1.

**Table 1**

| | Polylactic acid (wt%) | P(LA-co-3HB) | | Haze (%) | Total light transmittance (%) | Elongation at break (%) |
|---|---|---|---|---|---|---|
| | | (wt%) | (parts by weight per 100 parts by weight of polylactic acid) | | | |
| Example 1 | 80 | 20 | 25 | 4.02 | 92.75 | 41.8 |
| Example 2 | 60 | 40 | 66.7 | 5.95 | 92.53 | 107.1 |
| Example 3 | 40 | 60 | 150 | 8.82 | 92.26 | 118.7 |
| Comparative Example 1 | 100 | 0 | 0 | 3.59 | 92.8 | 3.9 |

Table 1 reveals that combining P(LA-co-3HB) with polylactic acid considerably increases the elongation at break while causing no substantial increase in haze of the polylactic acid. This demonstrates that combining P(LA-co-3HB) with polylactic acid can plasticize the polylactic acid without any substantial decrease in transparency of the polylactic acid.

### Comparative Example 2

Pellets and a sheet were obtained in the same manner as in Example 1, except that P(3HB-co-3HH) produced as the comparative polyester copolymer material B was used instead of the polyester copolymer material A. The measurements of the haze and total light transmittance were conducted in the same manner as in Example 1. The haze was 10.64% and the total light transmittance was 92.62%.

In this comparative example, the haze was much higher than in Examples and Comparative Example 1. This demonstrates that combining P(3HB-co-3HH) with polylactic acid causes a decrease in transparency of the polylactic acid.

### Comparative Example 3

Pellets and a sheet were obtained in the same manner as in Example 2, except that P(3HB-co-3HH) produced as the comparative polyester copolymer material B was used instead of the polyester copolymer material A. The measurements of the haze, total light transmittance, and elongation at break were conducted in the same manner as in Example 1. The haze was 13.35%, the total light transmittance was 92.26%, and the elongation at break was 38.6%.

In this comparative example, the haze was much higher than in Examples and Comparative Example 1. This demonstrates that combining P(3HB-co-3HH) with polylactic acid causes a decrease in transparency of the polylactic acid. Additionally, the elongation at break in Example 2, in which the same blend proportions were employed, was higher than that in the comparative example. This demonstrates that P(LA-co-3HB) used in Examples is superior in plasticizing effect on polylactic acid to P(3HB-co-3HH) used in the comparative example.

## Claims

1. A resin composition comprising:
polylactic acid; and
a polyester copolymer, the polyester copolymer being a product of random copolymerization of lactic acid and another hydroxycarboxylic acid, wherein the mole fraction of the lactic acid in the polyester copolymer is from 10 to 70 mol%.

2. The resin composition according to claim 1, wherein the other hydroxycarboxylic acid is at least one selected from the group consisting of 3-hydroxybutanoic acid, 3-hydroxypentanoic acid, 3-hydroxyhexanoic acid, 3-hydroxyheptanoic acid, 3-hydroxyoctanoic acid, 3-hydroxynonanoic acid, 3-hydroxydecanoic acid, 3-hydroxydodecanoic acid, 3-hydroxytetradecanoic acid, 3-hydroxypentadecanoic acid, and 3-hydroxyhexadecanoic acid.

3. The resin composition according to claim 1 or 2, wherein the content of the polyester copolymer is from 1 to 200 parts by weight per 100 parts by weight of the polylactic acid.

4. The resin composition according to any one of claims 1 to 3, wherein the other hydroxycarboxylic acid is 3-hydroxybutanoic acid.

5. A molded body produced by molding the resin composition according to any one of claims 1 to 4.

## Patentansprüche

1. Eine Harzzusammensetzung, umfassend:
Polymilchsäure; und
ein Polyester-Copolymer, wobei das Polyester-Copolymer ein Produkt einer statistischen Copolymerisation von Milchsäure und einer anderen Hydroxycarbonsäure ist, wobei der Molanteil der Milchsäure in dem Polyester-Copolymer 10 bis 70 Mol-% beträgt.

2. Die Harzzusammensetzung nach Anspruch 1, wobei die andere Hydroxycarbonsäure mindestens eine, ausgewählt aus der Gruppe bestehend aus 3-Hydroxybutansäure, 3-Hydroxypentansäure, 3-Hydroxyhexansäure, 3-Hydroxyheptansäure, 3-Hydroxyoctansäure, 3-Hydroxynonansäure, 3-Hydroxydecansäure, 3-Hydroxydodecansäure, 3-Hydroxytetradecansäure, 3-Hydroxypentadecansäure und 3-Hydroxyhexadecansäure, ist.

3. Die Harzzusammensetzung nach Anspruch 1 oder 2, wobei der Gehalt des Polyester-Copolymers 1 bis 200 Gewichtsteile pro 100 Gewichtsteile der Polymilchsäure beträgt.

4. Die Harzzusammensetzung nach einem der Ansprüche 1 bis 3, wobei die andere Hydroxycarbonsäure 3-Hydroxybutansäure ist.

5. Ein Formkörper, hergestellt durch Formen der Harzzusammensetzung nach einem der Ansprüche 1 bis 4.

## Revendications

1. Composition de résine comprenant :
un poly(acide lactique) ; et
un copolymère de polyester, le copolymère de polyester étant un produit de copolymérisation aléatoire d'acide lactique et d'un autre acide hydroxycarboxylique, dans laquelle la fraction molaire de l'acide lactique dans le copolymère de polyester est de 10 à 70 % en moles.

2. Composition de résine selon la revendication 1, dans laquelle l'autre acide hydroxycarboxylique est au moins l'un choisi dans le groupe constitué par l'acide 3-hydroxybutanoïque, l'acide 3-hydroxypentanoïque, l'acide 3-hydroxyhexanoïque, l'acide 3-hydroxyheptanoïque, l'acide 3-hydroxyoctanoïque, l'acide 3-hydroxynonanoïque, l'acide 3-hydroxydécanoïque, l'acide 3-hydroxydodécanoïque, l'acide 3-hydroxytétradécanoïque, l'acide 3-hydroxypentadécanoïque, et l'acide 3-hydroxyhexadécanoïque.

3. Composition de résine selon la revendication 1 ou 2, dans laquelle la teneur en le copolymère de polyester est de 1 à 200 parties en poids pour 100 parties en poids du poly(acide lactique).

4. Composition de résine selon l'une quelconque des revendications 1 à 3, dans laquelle l'autre acide hydroxycarboxylique est l'acide 3-hydroxybutanoïque.

5. Corps moulé produit par moulage de la composition de résine selon l'une quelconque des revendications 1 à 4.
